# EUROPÄISCHE PATENTANMELDUNG

(11) **EP 1 916 427 A2**
(43) Veröffentlichungstag der Anmeldung: **30.04.2008**
(21) Anmeldenummer: 07020934.1
(22) Anmeldetag: 25.10.2007
(51) Int. Cl.: F15B 15/18

(54) **Stellantrieb**

(30) Priorität: 26.10.2006 DE 202006016451 U
(71) Anmelder: Liebherr-Aerospace Lindenberg GmbH, 88161 Lindenberg/Allgäu (DE)
(72) Erfinder: Galle, Anton, 88299 Leutkirch (DE)
(74) Vertreter: Herrmann, Uwe

(57) **Zusammenfassung**

Die vorliegende Erfindung betrifft einen Stellantrieb insbesondere zum Einsatz in Flugsimulatoren, mit einem hydraulischen Stellzylinder (10) und einem Proportional- oder Servoventil (20) zur Steuerung des hydraulischen Stellzylinders (10), wobei am Stellzylinder (10) eine Motor-Pumpeinheit (40,30) zur Druckerzeugung angeordnet ist.

## Beschreibung

Die vorliegende Erfindung betrifft einen Stellantrieb, insbesondere zum Einsatz in Flugsimulatoren, mit einem hydraulischen Stellzylinder und einem Proportional-oder Servoventil zur Steuerung des hydraulischen Stellzylinders. Weiterhin betrifft die vorliegende Erfindung einen Flugsimulator mit mindestens einem solchen Stellantrieb.

Solche Stellantriebe mit einem hydraulischen Stellzylinder werden verwendet, um die Fahrerkabine eines Flugsimulators zu bewegen und so eine realistische Simulation der Flugbewegung zu ermöglichen.

Bei bekannten Systemen kommen dabei handelsübliche Stellzylinder zum Einsatz, welche von einem zentralen Hydraulikaggregat mit Druck versorgt werden. Aufgrund der langen Zuleitungen verlieren solche Stellantriebe aber an Dynamik, insbesondere aufgrund der großen Hydraulikfluidvolumina der Hydraulikleitungen. Auch sonst sind die bekannten Stellantriebe wenig dynamisch, insbesondere da die Stellzylinder zur Bewegung der Fahrerkabine des Flugsimulators erst die statische Last, welche durch das Gewicht der Fahrerkabine auf Ihnen lastet, überwinden müssen und zudem die Kolbenstangen der Stellzylinder nicht leichtgängig genug sind. Auch sonst sind die bekannten Systeme teuer, schlecht zu warten und verbrauchen viel Platz und Energie. Insbesondere die großen Hydraulikfluidvolumina durch die Zuleitungen von dem zentralen Hydraulikaggregat verteuern den Betrieb, wobei die Wartung und der Wechsel der einzelnen Stellantriebe zudem durch das notwendige Ablassen des Hydraulikfluids erschwert werden.

Aufgabe der vorliegenden Erfindung ist es deshalb, einen Stellantrieb insbesondere zum Einsatz in Flugsimulatoren zur Verfügung zu stellen, welcher eine hohe Dynamik aufweist. Des Weiteren ist es Aufgabe der vorliegenden Erfindung, einen Stellantrieb zur Verfügung zu stellen, welcher kostengünstig produziert und betrieben werden kann und leicht zu warten ist. Ebenso ist es Aufgabe der vorliegenden Erfindung, einen entsprechenden Flugsimulator zur Verfügung zu stellen.

Erfindungsgemäß wird diese Aufgabe von einem Stellantrieb gemäß Anspruch 1 gelöst. Ein solcher Stellantrieb insbesondere zum Einsatz in Flugsimulatoren umfasst dabei einen hydraulischen Stellzylinder und ein Proportional- oder Servoventil zur Steuerung des hydraulischen Stellzylinders, wobei eine Motor-Pumpeinheit zur Druckerzeugung am Stellzylinder angeordnet. Dies erhöht die Dynamik des Stellantriebs, da so auf lange Zuleitungen verzichtet werden kann. Auch die Menge des zum Betrieb des Stellantriebs nötigen Hydraulikfluids kann massiv gesenkt werden. Beim Betrieb mehrerer Stellantriebe kann so auch auf eine zentrale Hydraulikdruckquelle und externe Hydraulikleitungen verzichtet werden. Dies erlaubt wiederum eine hohe Dynamik sowie Kosten- und Platzersparnisse, da nicht extra ein separater Raum für eine große Hydraulikeinheit zur Verfügung gestellt werden muss. Auch ist die Wartung des Systems besonders einfach, da der gesamte Stellantrieb komplett ausgebaut werden kann, ohne den Stellzylinder von der Motorpumpeinheit zu trennen. Es müssen also zum Ausbau des Stellantriebs lediglich elektrische Leitungen getrennt werden.

Zudem ergibt sich eine sehr schnelle Ansteuerung, da nicht erst große Verbindungsleitungen bedruckt werden müssen. Vorteilhafterweise ist die Motorpumpeinheit dabei am Gehäuse des Stellzylinders angebaut, entweder direkt oder über Verbindungselemente, und bewegt sich mit dem Stellzylindergehäuse mit. Die Motorpumpeinheit besteht dabei vorteilhafterweise aus einem Induktionsmotor mit konstanter Drehgeschwindigkeit und weiterhin vorteilhafterweise aus einer Pumpe mit einstellbarer Fördermenge, vorteilhafterweise eine Axialkolbenpumpe mit einstellbaren Hub. Der Motor ist dabei vorteilhafterweise mit einem Ventilator ausgestattet, um sowohl den Motor als auch den Hydraulikspeicher zu kühlen. Der Motor ist weiterhin vorteilhafterweise über ein Isolierelement am Stellzylinder angebaut, um die Übertragung von Vibrationen und Lärm vom Motor auf den Stellzylinder zu vermindern. Die Pumpe ist vorteilhafterweise im Inneren eines Hydraulikspeichers angeordnet, um das Risiko eines Auslaufens zu verringern. Die Pumpe hat dabei vorteilhafterweise eine integrierte Hydrauliksteuerung zur Einstellung eines konstanten Ausgabedrucks. Vorteilhafterweise wird die Pumpe bei einem Viertel ihrer Maximalleistung betrieben, um eine große Lebensdauer zu garantieren.

Weiterhin vorteilhafterweise ist auch das Proportional- oder Servoventil am Stellzylinder angeordnet ist. Durch die Anordnung des Ventils am Stellzylinder werden lange Hydraulikleitungen zwischen Ventil und Stellzylinder vermieden, so dass der erfindungsgemäße Stellantrieb extrem kurze Ansprechzeiten und eine große Dynamik aufweist.

Besonders vorteilhafterweise kommt dabei ein Proportionalventil zum Einsatz, da dieses weniger empfindlich auf Verunreinigungen im Hydraulikfluid reagiert als ein Servoventil. Für den Fachmann ist dabei offensichtlich, dass der Einsatz eines solchen Proportionalventils auch ohne die Anordnung am Stellzylinder von großem Vorteil ist, in Kombination ergibt sich aber eine besonders gute Dynamik und Steuerbarkeit. Vorteilhafterweise umfasst das Proportionalventil dabei ein integriertes Feedback über die Ventilstellung sowie vorteilhafterweise eine integrierte Elektronik. Das Feedback-Signal, welches die Stellung des Ventils angibt, kann dafür verwendet werden, Fehlfunktionen zu erkennen und zu vermeiden. Die integrierte Elektronik erlaubt eine präzise und hochdynamische Ansteuerung und ermöglicht es, unterschiedliche Input-Signale zur Ansteuerung zu verwenden. Vorteilhafterweise ist das Proportionalventil dabei zweistufig aufgebaut, wobei die erste Stufe direkt angesteuert wird.

Die vorliegende Erfindung umfasst weiterhin einen Stellantrieb, bei welchem die Kolbenstange des Stellzylinders zur Reibungsreduktion mittels eines Linearlagers geführt ist. Dies ermöglicht eine besonders leichtgängige Bewegung der Kolbenstange und damit eine besonders gute Dynamik des Stellantriebs. Vorteilhafterweise handelt es sich dabei um ein Linearkugellager, welches vorteilhafterweise in der Spitze des Stellzylindergehäuses angeordnet ist. Die Spitze des Stellzylindergehäuses ist dabei vorteilhafterweise ein getrenntes Element, welches von vorne in den Rest des Stellzylindergehäuses eingebaut wird. Weiterhin umfasst die vorliegende Erfindung vorteilhafterweise reibungsarme Führungsringe und/oder Dichtungen für die Kolbenstange. Insgesamt kann so eine sehr reibungsarme Lagerung der Kolbenstange und damit ein hochdynamische Bewegung des Stellantriebs erreicht werden. Für den Fachmann ist dabei offensichtlich, dass die Verwendung eines Linearlagers zur Führung der Kolbenstange des Stellzylinders unabhängig von der sonstigen Konstruktion des Stellantriebs von großem Vorteil ist.

Die vorliegende Erfindung umfasst weiterhin einen Stellantrieb, bei welchem im Stellzylinder eine Gasfeder, insbesondere zum Ausgleich zumindest eines Teils der auf dem Stellzylinder lastenden statischen Last, integriert ist. So muss nicht mehr die gesamte statische Last über den Hydraulikdruck bewegt werden, so dass der Stellantrieb wiederum sehr schnell reagiert und eine hohe Dynamik aufweist. Vorteilhafterweise ist die Gasfeder dabei mit Stickstoff gefüllt. In weiterhin vorteilhafter Weise ist die Gasfeder in der Kolbenstange des Stellzylinders integriert, so dass hier eine sehr kompakte Konstruktion gewählt werden kann. Vorteilhafterweise umfasst die Gasfeder weiterhin einen Drucksensor, um den Gasdruck in der Gasfeder überwachen zu können. Dabei ist für den Fachmann offensichtlich, dass die Verwendung einer Gasfeder im Stellzylinder auch unabhängig von der sonstigen Konstruktion des Stellantriebs von großem Vorteil ist.

In weiterhin vorteilhafter Weise umfasst die Gasfeder einen Positionssensor zur Bestimmung der Position des Stellzylinderkolbens. Dies ermöglicht eine äußerst kompakte Bauform und erleichtert auch den Wechsel oder die Reparatur des Sensors, da die Hydraulikflüssigkeit hierfür nicht ausgelassen werden muss. Zudem ermöglicht die Anordnung des Positionssensors in der Gasfeder ein besonders verschleißarmes Design.

In weiterhin vorteilhafter Weise ist bei der vorliegenden Erfindung ein Hydraulikspeicher zur Reduktion der benötigten Spitzenleistung der Motorpumpeinheit vorgesehen. Leistungsspitzen können so über den vorteilhafterweise als Hochdruckhydraulikspeicher ausgelegten Hydraulikspeicher abgefedert werden, so dass die Motorpumpeinheit weniger stark ausgelegt werden muss. So können Gewicht, Platz und Kosten gespart werden.

In weiterhin vorteilhafter Weise wird der Hydraulikspeicher auch dazu genutzt, im Fehlerfall den Stellantrieb aktiv ein- oder auszufahren. Dies erhöht die Sicherheit des Stellantriebs, so dass nicht extra ein zweites paralleles System zum Ein- oder Ausfahren des Stellantriebs nötig ist. Auch so können Kosten gespart werden.

Vorteilhafterweise ist auch der Hydraulikspeicher am Stellzylinder angeordnet.

In weiterhin vorteilhafter Weise ist das gesamte Hydrauliksystem am Stellzylinder angeordnet. So kann auf externe Hydraulikleitungen komplett verzichtet werden, was die zu verwendende Ölmenge erheblich verringert und damit auch Wartungskosten minimiert. Des Weiteren erlaubt die kompakte Anordnung des Hydrauliksystems am Stellzylinder besonders kurze Reaktionszeiten und eine hohe Dynamik des Stellantriebs. Auch der Einbau bzw. der Wechsel eines Stellantriebs ist so problemlos möglich, da lediglich elektrische Verbindungen hergestellt werden müssen.

In weiterhin vorteilhafter Weise weist der Stellzylinder des erfindungsgemäßen Stellantriebs insbesondere im Hubendbereich eine Dämpfung auf. Dies erlaubt einen besonders sicheren und verschleißarmen Betrieb des erfindungsgemäßen Stellantriebs, wobei die Dämpfungskraft vorteilhafterweise nur im Hubendbereich wirkt und dort kontinuierlich ansteigt. In weiterhin vorteilhafter Weise sind Rückschlagventile vorgesehen, um Kavitationen in der Hydraulikflüssigkeit zu vermeiden.

In weiterhin vorteilhafter Weise ist bei dem erfindungsgemäßen Stellantrieb ein Ventil zum Noteinfahren vorgesehen, welches vorzugsweise parallel zum Proportional- bzw. Servoventil angebaut ist, insbesondere um hydraulische Verluste zu vermindern und die Baugröße des Ventils zu reduzieren. Im Fehlerfall kann das Ventil zum Noteinfahren den Stellzylinder in eine sichere Position bringen. Hierzu beaufschlagt es im Fehlerfall die entsprechende Druckkammer des Stellzylinders mit Druck, insbesondere aus dem Druckspeicher. Bei dem Ventil zum Noteinfahren handelt es sich vorteilhafterweise um ein Zweipositionskolbenventil.

In weiterhin vorteilhafter Weise erfolgt bei dem erfindungsgemäßen Stellantrieb die Ölfiltration über den Leckölstrom der Pumpe, wobei vorzugsweise kein Filter zwischen Pumpe und Proportional- bzw. Servoventil angebaut ist. Dies ermöglicht wiederum eine besonders hohe Dynamik des Stellantriebs. Die hohe Dynamik ergibt sich im Wesentlichen daraus, dass keine Druckverluste zwischen dem Proportional- bzw. Servoventil und der Pumpe auftreten. Zudem kann ein Niederdruckfilter verwendet werden, was Kosten spart. Auch ist so der Durchfluss durch den Filter fast konstant, was die Effektivität der Filterung erhöht und es ermöglicht, nur einen kleinen Filter einzubauen.

Vorteilhafterweise ist bei dem erfindungsgemäßen Stellantrieb weiterhin der Ventilblock des Stellantriebs integraler Bestandteil des Stellzylindergehäuses. Dies bedeutet eine besonders kompakte Anordnung der Ventile, wobei die Wege zwischen Stellzylinder und Ventilen minimiert werden und keine Schläuche zum Einsatz kommen müssen.

In weiterhin vorteilhafter Weise ist bei dem erfindungemäßen Stellantrieb eine elektrisch betriebene Motorpumpeinheit vorgesehen, die direkt an ein Aggregat zur Bereitstellung der elektrischen Leistung, insbesondere ein Transformator, angeschlossen ist, wobei die Ansteuerung des Stellantriebs über das Proportional- bzw. Servoventil geschieht. Insbesondere im Vergleich zu einem komplett elektromotorischen Antrieb der Stellantriebe kann so komplett auf eine teure Hochleistungselektronik zur Ansteuerung der Motoren verzichtet werden, da diese mit konstanter Drehzahl betrieben werden.

In weiterhin vorteilhafter Weise umfasst der Stellzylinder des erfindungsgemäßen Stellantriebs zwei Dichtungen, insbesondere eine Niedrigdruck- und eine Hochdruckdichtung, wobei zwischen den Dichtungen eine Leckölleitung vorgesehen ist. Diese Anordnung erlaubt wiederum eine besonders reibungsarme Lagerung des Kolbens des Stellzylinders.

Die vorliegende Erfindung umfasst weiterhin einen Flugsimulator mit mindestens einem und insbesondere mit mehreren, insbesondere mit sechs Stellantrieben nach einem der vorangegangenen Ansprüche. Ein solcher Flugsimulator besitzt eine extrem hohe Dynamik, ist kostengünstig und leicht zu warten und hat nur einen geringen Platzbedarf sowie einen niedrigen Energieverbrauch.

Vorteilhafterweise sind bei dem erfindungsgemäßen Flugsimulator, insbesondere bei einem Flugsimulator mit sechs erfindungsgemäßen Stellantrieben, an den Stellzylindern der Stellantriebe jeweils eine Motorpumpeinheit zur Druckerzeugung angeordnet. Die Motorpumpeinheiten stellen damit den jeweiligen Stellzylindern den notwendigen Druck zur Verfügung, so dass auf eine zentrale Druckversorgung verzichtet werden kann. Dies erlaubt eine einfache Wartung, da die einzelnen Stellantriebe einfach ausgebaut werden können, da lediglich elektrische Kabel zum Anschluss der einzelnen Stellantriebe verwendet werden müssen. Zudem ergibt sich nur ein kleines Hydraulikvolumen und damit entsprechend geringe Betriebskosten sowie ein besonders geringer Platzbedarf bei sehr hoher Dynamik.

Vorteilhafterweise ist bei dem erfindungsgemäßen Flugsimulator dabei ein zentrales Aggregat zur Bereitstellung der Leistung für die Motoren aller Motorpumpeinheiten vorgesehen. Das vorteilhafterweise als Transformator ausgestaltete zentrale Aggregat ermöglicht so eine zentrale Stromversorgung aller Motoren. Die Motoren der Motorpumpeinheiten der Stellantriebe sind dabei vorteilhafterweise direkt an dieses zentrale Aggregat angeschlossen, so dass auf teure Hochleistungselektronik verzichtet werden kann. Die Ansteuerung der Stellantriebe erfolgt dann über die Ansteuerung der Proportional- bzw. Servoventile, welche wiederum die Ansteuerung der Stellzylinder übernehmen. Vorteilhafterweise kann das zentrale Aggregat mit unterschiedlichen Spannungen betrieben werden, was die Flexibilität des Flugsimulators erhöht. Zudem hat das zentrale Aggregat vorteilhafterweise einen zentralen Sicherheitsschalter, um die Energiezufuhr in einem Fehlerfall zentral abzuschalten und so ein sicheres Einfahren aller Stellantriebe zu garantieren.

In weiterhin vorteilhafter Weise umfasst der Flugsimulator eine Steuerungs-, Regelungs- und/oder Überwachungselektronik für die Stellantriebe. Diese Elektronik kann vorteilhafterweise direkt an den Simulationsrechner, welcher den Flugsimulator steuert, angeschlossen werden, und erlaubt so eine zentrale Steuerung, Regelung und/oder Überwachung der Stellantriebe.

Die vorliegende Erfindung wird nun anhand von Zeichnungen näher beschrieben.

Dabei zeigen:
- Figur 1:: eine Prinzipdarstellung des erfindungsgemäßen Stellantriebs,
- Figur 2:: eine perspektivische Ansicht des erfindungsgemäßen Stellantriebs,
- Figur 3:: eine Schnittansicht des erfindungsgemäßen Stellantriebs,
- Figur 4:: eine Frontalansicht des erfindungsgemäßen Stellantriebs,
- Figur 5:: eine perspektivische Ansicht der erfindungsgemäßen Motorpumpeinheit
- Figur 6a:: eine teilweise Schnittansicht des vorderen Abschnitts des erfindungsgemäßen Stellzylinders,
- Figur 6b:: eine perspektivische Ansicht eines Linearlagers des erfindungsgemäßen Stellzylinders,
- Figur 7:: eine teilweise Schnittansicht des hinteren Abschnitts des erfindungsgemäßen Stellzylinders,
- Figur 8:: eine Prinzipdarstellung des erfindungsgemäßen Flugsimulators und
- Figur 9:: zwei perspektivische Ansichten des erfindungsgemäßen Flugsimulators.

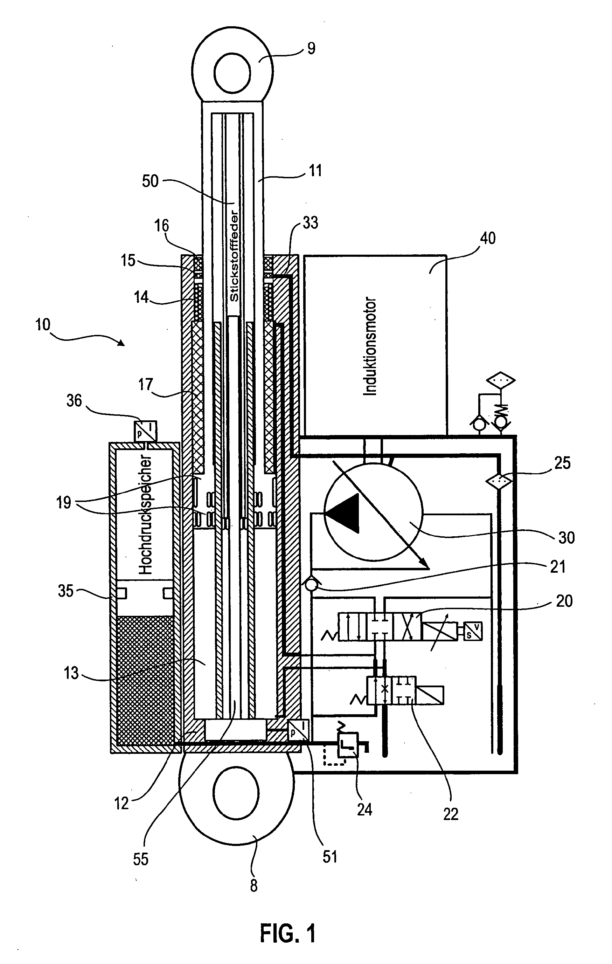

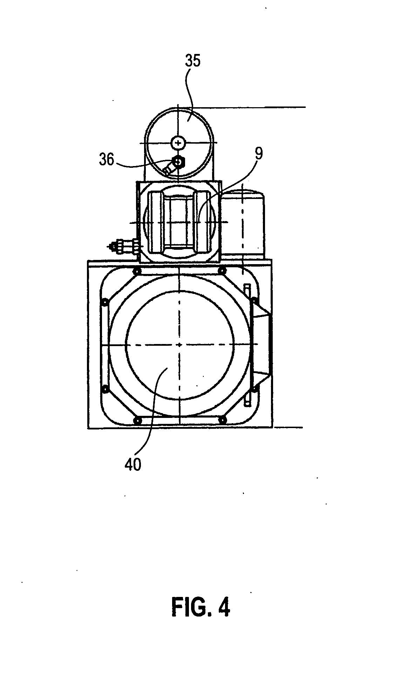

Figuren 1 bis 4 zeigen ein Ausführungsbeispiel des erfindungsgemäßen Stellantriebs. Dieses umfasst einen hydraulischen Stellzylinder 10 mit einem Zylindergehäuse 12 und einer darin verschiebbaren Zylinderstange 11. Zylindergehäuse 12 und Kolbenstange 11 verfügen jeweils über Anlenkpunkte 8 und 9. Die Kolbenstange 11 kann dadurch aus dem Zylindergehäuse 12 herausbewegt werden, dass die hintere Druckkammer 13 mit Druck beaufschlagt wird und die vordere Druckkammer 17 auf Rücklaufdruck steht. Umgekehrt kann die Kolbenstange 11 in das Zylindergehäuse 12 eingezogen werden, indem die vordere Druckkammer 17 mit Druck beaufschlagt wird und die hintere Druckkammer 13 auf Rücklaufdruck liegt. Am Zylinderkolben 11 sind Dämpfer 19 angeordnet, welche in den Hubendpositionen die Bewegung der Kolbenstange 11 dämpfen.

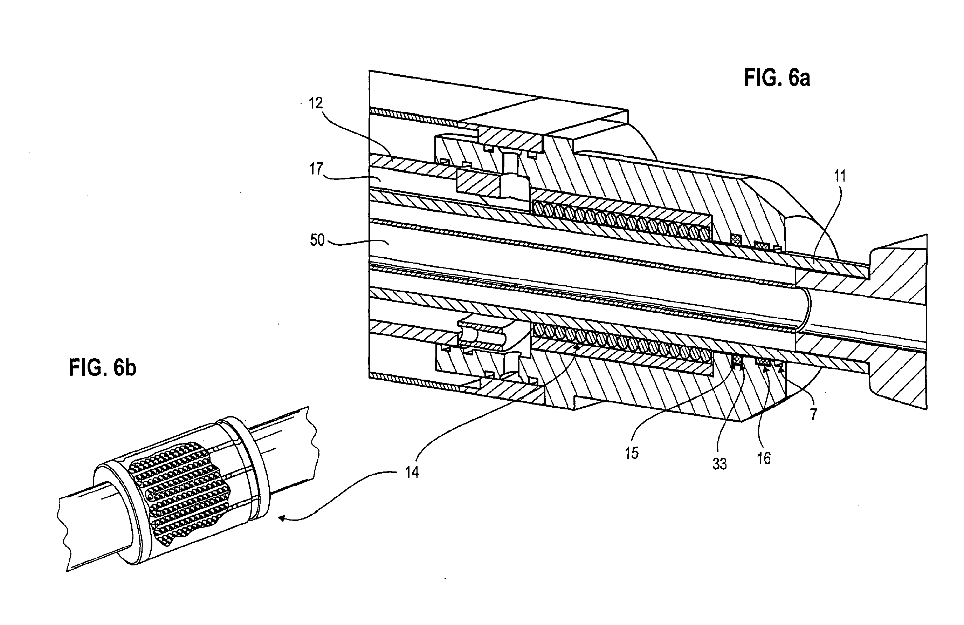

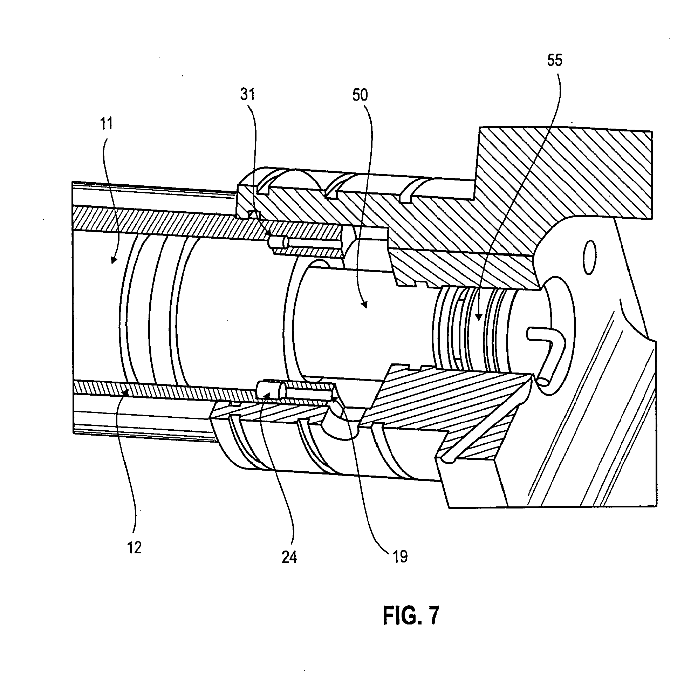

Im Inneren des Kolben 11 ist eine Gasfeder 50 angeordnet. Im Inneren der Gasfeder 50 ist wiederum ein Positionssensor 55 angebracht. Des Weiteren ist ein Drucksensor 51 zum Messen des Gasdrucks in der Gasfeder vorhanden. Die Kolbenstange 11 ist über ein Linearlager 14 reibungsarm im Zylindergehäuse 12 gelagert. Weiterhin sind Dichtungen 15 und 16 vorgesehen. Diese Aspekte der vorliegenden Erfindung werden noch im Bezug auf Fig. 6 und 7 näher erläutert werden.

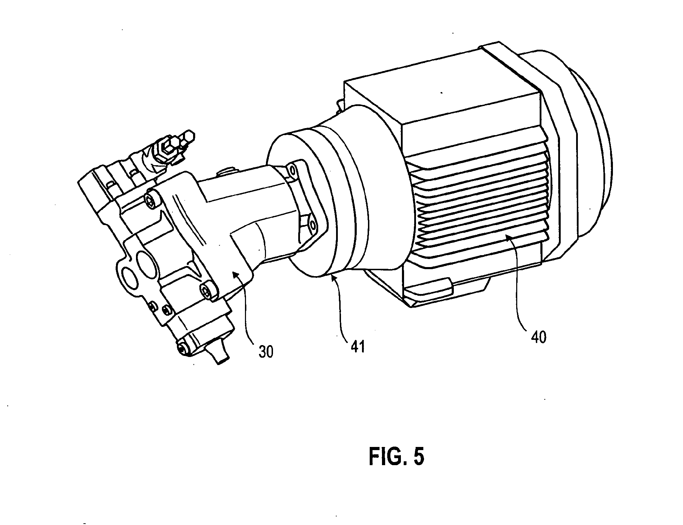

Am Stellzylinder 10 ist eine Motorpumpeinheit aus einem Motor 40 und einer Pumpe 30 angeordnet. Der Motor 40 ist dabei ein Induktionsmotor mit konstanter Drehzahl, welcher die verstellbare Pumpe 30 antreibt. Die Pumpe 30 stellt über ein Rückschlagventil 21 Druck zur Verfügung, welcher an den Eingang eines Proportionalventils 20 angelegt ist. Dieser Aspekt der Erfindung wird noch näher mit Bezug auf Fig. 5 beschrieben.

Das Proportionalventil 20 ist dabei ein zweistufiges hochdynamisches Ventil, bei welchen die erste Stufe direkt angesteuert wird und welches einen integrierten Sensor zur Abgabe eines Feedbacksignals über die Ventilstellung umfasst. Ebenso ist die entsprechende Elektronik im Proportionalventil integriert. Ein solches Ventil hat den Vorteil, dass nur wenig Energie verbraucht wird (Leckölstrom). Ein Proportionalventil ist zudem weniger anfällig für Verunreinigungen des Hydrauliköls als ein Servoventil. Die integrierte Elektronik ermöglicht eine präzise und dynamische Regelung des Ventils, wobei unterschiedliche Inputsignale verwendet werden können. Das Feedbacksignals der Ventilstellung ermöglicht es, Fehler zu erkennen und schnell auf diese zu reagieren. Die Anordnung des gesamten Hydrauliksystems am Stellzylinder 10 ermöglicht es, eine extrem kompakte Bauform ohne jegliche äußere Hydraulikanschlüsse oder Hydraulikleitungen zu erreichen. Zudem ermöglicht insbesondere das nur minimale Hydraulikölvolumen zwischen Proportionalventil und Hydraulikkammern 13 und 17 ein sehr schnelles Ansprechen. Zudem kann die Anzahl der statischen Dichtungen auf ein Minimum reduziert werden.

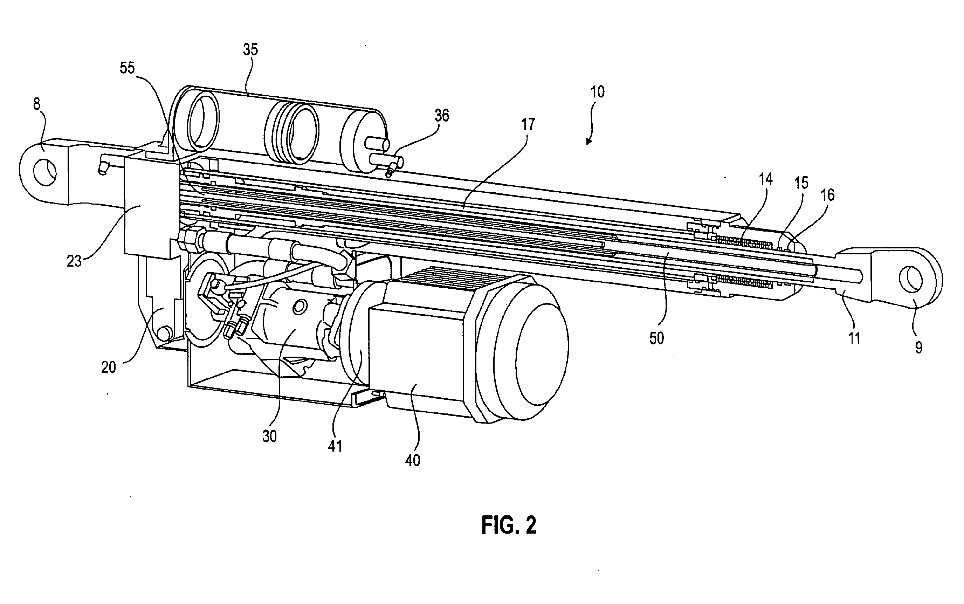

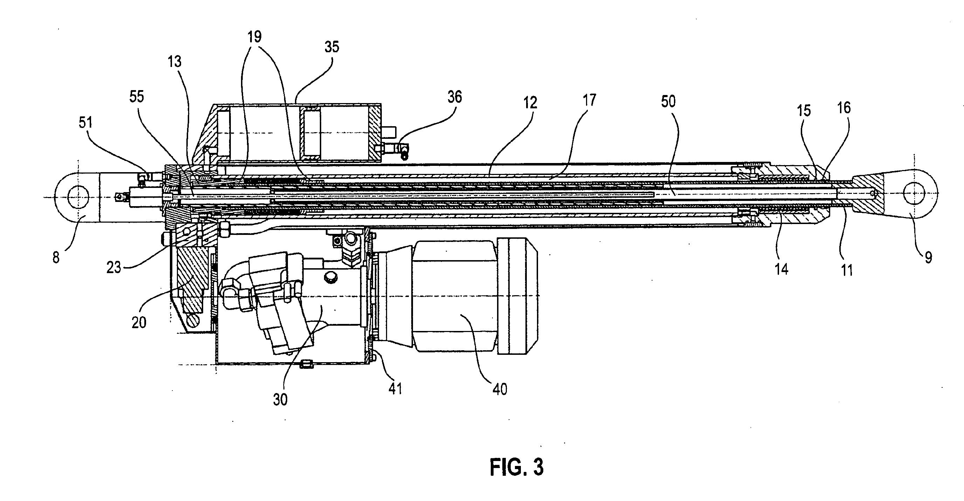

Wie insbesondere aus Figuren 2 und 3 gut zu erkennen ist, ist der Ventilblock 23 integraler Bestandteil des Zylindergehäuses des Stellzylinders 10. Das Proportionalventil 20 ist dabei von außen an den Ventilblock 23 angebaut, so dass das Proportionalventil 20 nicht innerhalb des ölführenden Bereichs angeordnet ist und damit gut zugänglich ist.

Des Weiteren ist ein Hochdruckspeicher 35 vorgesehen, der ebenfalls von der Pumpe mit Druck beaufschlagt wird und mit dem Eingang des Proportionalventils in Verbindung steht. Am Hochdruckspeicher 35 ist weiterhin ein Drucksensor 36 angeordnet. Der Hochdruckspeicher 35 ist dabei ein entsprechend angepasster Kolbenhochdruckspeicher, welcher ebenfalls am Stellzylinder 10 angeordnet ist. Wie aus den Zeichnungen zu erkennen, ist er direkt am Zylindergehäuse 12 angebaut und befindet sich auf der der Motorpumpeneinheit gegenüberliegenden Seite. Durch die Verwendung des Hochdruckspeichers 35 kann die benötigte Spitzenleistung der Motorpumpeneinheit reduziert werden. Er kann zudem dazu genutzt werden, im Fehlerfall den Stellantrieb aktiv einzufahren. Hierzu wird der Hochdruckspeicher im Fehlerfall mit der Hydraulikkammer 17 verbunden.

Dabei ist ein Noteinfahrventil 22 vorgesehen, über das bei einer Fehlfunktion die hintere Druckkammer 13 auf Rücklaufdruck geschaltet werden kann und die vordere Druckkammer 17 mit Druck beaufschlagt wird, so dass die Kolbenstange 11 eingefahren wird. Das Ventil zum Noteinfahren 22 und das Proportionalventil 20 sind dabei parallel angeordnet, um die hydraulischen Verluste und die Baugröße der Ventile zu reduzieren. Das Ventil zum Noteinfahren 22 ist dabei als einfaches Zweipositionenventil ausgeführt. Wenn nötig, kann alternativ zur oben beschriebenen Vorgehensweise im Fehlerfall der Hochdruckspeicher 35 auch isoliert werden, was die Sicherheit nochmals erhöht.

Die Ölfiltration erfolgt in dem erfindungsgemäßen Stellantrieb über einen Filter 25 im Leckölstrom der Pumpe, so dass kein Filter zwischen Pumpe 30 und Proportionalventil 20 angeordnet werden muss. Hierdurch muss nur ein Niederdruckfilter verwendet werden, wobei zusätzlich sichergestellt ist, dass der Durchfluss durch den Filter in etwa konstant ist. Hierdurch muss nur ein kleiner Filter verwendet werden. Zudem entstehen durch den Filter keine Druckverluste in der Hochdruckleitung. Auch kann ein Standardfilter verwendet werden, wobei der Filter so installiert ist, dass er mit einem Minimum an Ölverlust einfach zu wechseln ist. Dabei ist eine Leckölleitung 33 am Zylindergehäuse vorgesehen, welche zwischen den Dichtungen 15 und 16 angeordnet ist.

Figur 5 zeigt nun die Motorpumpeinheit des erfindungsgemäßen Stellantriebs. Der Motor 40 ist ein Elektromotor, und zwar ein robuster Induktionsmotor mit konstanter Geschwindigkeit. Werden mehrere Stellantriebe nebeneinander z. B. in einem Flugzeugsimulator verwendet, werden die einzelnen Stellantriebe nacheinander mit einem zeitlichen Abstand von 2 Sekunden angefahren, um die Leistungsspitzen im System zu reduzieren. Aus Gründen der besseren Kühlung und um das Gewicht des Motors zu reduzieren, ist das Gehäuse des Motors aus Aluminium gefertigt. Der Motor ist zudem mit einem leisen Ventilator ausgestattet, um sowohl den Motor als auch den Hydraulikspeicher zu kühlen. Zudem verfügt der erfindungsgemäße Elektromotor über Wärmeschutzschalter an jeder Windung. Der Motor ist am Gehäuse des Stellantriebs über einen speziellen Isolierflansch 41 angeflanscht, um die Geräuschbelastung zu vermindern und die Übertragung von Vibrationen auf den Stellantrieb zu minimieren.

Die Pumpe 30 ist verstellbar ausgeführt und stellt so einen konstanten Systemdruck zur Verfügung. Es handelt sich dabei um eine Axialkolbenpumpe mit einstellbarem Hub. Diese ist innerhalb des Hydraulikölspeichers angeordnet, so dass Leckagen nach außen ausgeschlossen sind. Die Pumpe verfügt über eine integrierte Hydraulikregelung, um einen konstanten Druck zur Verfügung zu stellen. Die Pumpe wird nur mit ca. ¼ ihrer Maximalleistung betrieben, um den Verschleiß zu minimieren und so eine lange Lebensdauer der Pumpe zu garantieren.

Figur 6a zeigt nun den vorderen Bereich des Hydraulikzylinders 10 im Detail. Hierbei ist gut die Stickstofffeder 50 zu sehen, welche im Inneren des Kolbens 11 angeordnet ist. Der Kolben 11 ist reibungsarm über Linearkugellager 14 im Hydraulikzylinder 12 gelagert. Zudem sind zwei Dichtungen 15 und 16 vorgesehen, welche extrem reibungsarm ausgelegt sind und zwischen denen sich eine Leckölleitung 33 befindet. Bei der Dichtung 15 handelt es sich dabei um eine reibungsarme Hochdruckdichtung, während die äußere Dichtung 16 eine zweite leckagefreie Dichtung darstellt. Zudem ist ein Abstreifer 7 vorgesehen. Die Dichtungen 15 und 16 sind dabei hinter dem Linearkugellager 14 angeordnet, so dass sich das Linearkugellager 14 noch im Bereich der Druckkammer 17 befindet. Das Linearkugellager ist nochmals in Figur 6b im Detail dargestellt.

Figur 7 zeigt nun den Aufbau des hinteren Teils des Zylindergehäuses in einer teilweisen Schnittdarstellung. In dem Zylindergehäuse 12 ist der Kolben 11 verschiebbar gelagert. Im Kolben 11 ist wiederum die Stickstofffeder 50 angeordnet ist. Zum Messen des Drucks in der Stickstofffeder 50 ist ein Sensor 51 vorgesehen. Zudem besitzt die Gasfeder 50 ein Füllventil zur einfachen Zuführung von Stickstoff am hinteren Ende des Zylindergehäuses. Die Stickstofffeder 50 dient bei dem erfindungsgemäßen Stellantrieb dazu, zumindest einen Teil der auf dem Stellantrieb lastenden statischen Last auszugleichen. Dies erhöht die Dynamik des Stellantriebs, welcher hierdurch eine geringere Last hydraulisch bewegen muss.

In der Stickstofffeder ist nun der Positionssensor 55 angeordnet, was eine extrem kompakte Bauweise erlaubt. Zudem muss das Hydrauliköl nicht abgelassen werden, um den Sensor 55 zu ersetzen. Der Sensor 55 umfasst eine integrierte Elektronik. Durch die Anordnung des Sensors innerhalb der Stickstofffeder 50 ist dieser zudem extrem verschleißarm und leicht zugänglich.

Das Hydrauliksystem umfasst weiterhin einen Durchflussbegrenzer 31 sowie Rückschlagventile 24, um Kavitationen zu vermeiden. Zudem sind an der Zylinderstange 11 Dämpfer 19 angeordnet, welche in den Hubendpositionen die Bewegungen der Kolbenstange 11 dämpfen. Dabei steigt die Dämpfung im Bereich der Hubendposition sanft an, so dass eine effektive Dämpfung erreicht wird.

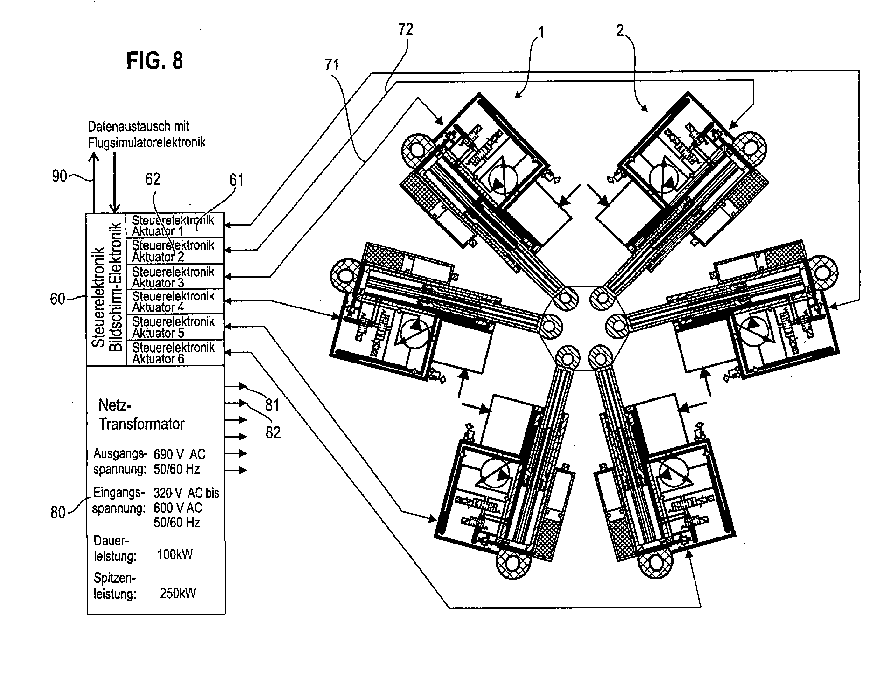

Figur 8 zeigt nun den erfindungsgemäßen Flugzeugsimulator, bei welchem die erfindungsgemäßen Stellantriebe zum Einsatz kommen. Um den Flugzeugsimulator in sechs Freiheitsgraden bewegen zu können, sind sechs Stellantriebe vorgesehen. Zur Stromversorgung der Induktionsmotoren der einzelnen Stellantriebe ist dabei ein zentraler Transformator 80 vorgesehen, welcher die Induktionsmotore der Stellantriebe direkt über Versorgungsleitungen 81 und 82 versorgt. Hierdurch kann im Vergleich zu rein elektromotorischen Stellantrieben auf Hochleistungselektronik verzichtet werden. Der Transformator ist so ausgestattet, dass er über unterschiedliche Eingangsspannungen mit Strom versorgt werden kann. Er weist zudem einen Sicherheitsschalter auf, mit welchem der Transformator von der Stromquelle getrennt werden kann, so dass automatisch alle Induktionsmotoren stromlos sind und so ein sicheres Noteinfahren der Stellantriebe eingeleitet wird. Wenn nötig, umfasst der Transformator Elemente zur Leistungsfaktorenkorrektur.

Der Flugzeugsimulator umfasst weiterhin die Steuerelektroniken für die Proportionalventile. Die Aufgabe der Steuerelektroniken 61 und 62 ist dabei, die Signale des Simulator-Controllers in ein Signal zur Ansteuerung der Proportionalventile der Stellantriebe umzuwandeln. Die Steuerelektroniken steuern so die Proportionalventile und hierüber die Stellung der Stellantriebe. Die Proportionalventile der Stellantriebe, z. B. der Stellantriebe 1 und 2, sind dabei über Steuerleitungen, z. B. Leitungen 71 und 72 mit ihren jeweiligen Steuerelektroniken, z. B. 61 und 62 verbunden.

Zudem besteht die Möglichkeit, über die Signale der Positionssensoren der Stellantriebe die Stellung der Stellantriebe zu ermitteln und in die Ansteuerung der Proportionalventile einzubeziehen, so dass sich ein geschlossener Position-Loop ergibt. Hierzu gibt es die Möglichkeit, input/Output-Karten an der Flugsimulatorsteuerung 60 anzubringen.

Darüber hinaus verfügt die Simulatorsteuerung 60 über zwei Industriecomputer, einen Bildschirm sowie ein Keyboard und ein Maus. Darüber hinaus umfasst auch die Simulatorsteuerung 60 eine Notausregelung. Die Antriebssteuerung 60 kommuniziert über Datenleitungen 90 mit dem Rest der Flugsimulatorelektronik.

Das System überwacht weiterhin auch alle unkritischen Funktionen, wie z. B. den Druck in den Stickstofffedern sowie die Feedbacksignale der Relais usw.. Es kann darüber hinaus automatische Testprozeduren durchführen.

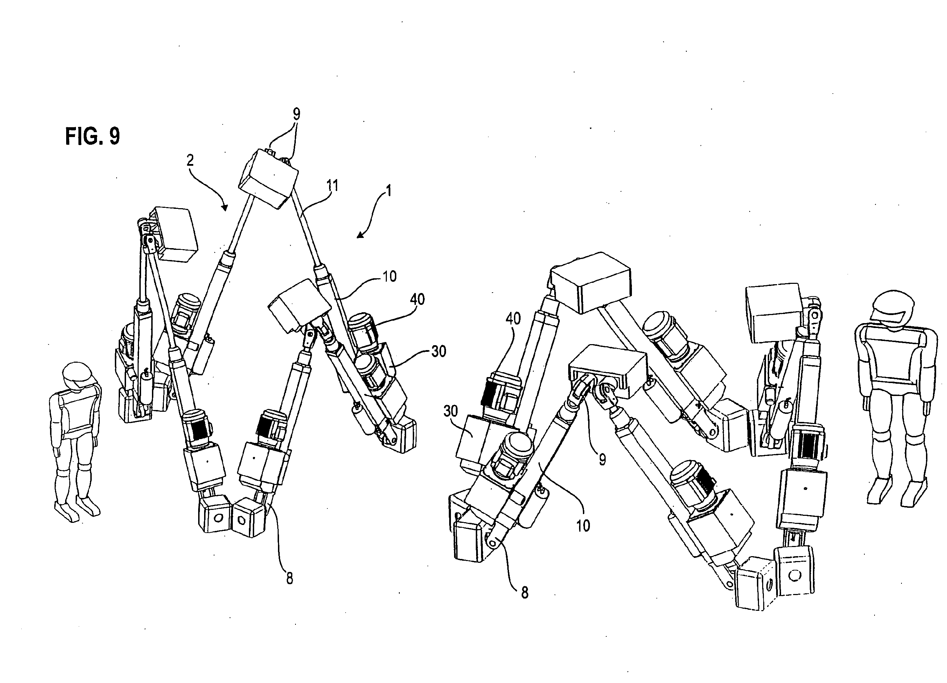

Zum Aufbau des auch in Figur 9 gezeigten Flugzeugsimulators bzw. der die Fahrerkabine des Flugzeugsimulators bewegenden Stelleinheit werden die sechs Stellantrieben jeweils paarweise V-förmig miteinander verbunden. Die Stellzylinder sind über ihre Anlenkpunkte unten mit entsprechenden Anlenkpunkten am Boden sowie oben mit der Fahrerkabine verbunden. Die Induktionsmotoren werden dann direkt mit dem Transformator verbunden, während die Proportionalventile mit der Ansteuerelektronik verbunden werden.

Im Vergleich zu den bekannten hydraulischen Flugsimulatoren ergeben sich damit die folgenden Vorteile:
Die einzelnen Stellantriebe müssen nur über elektrische Leitungen mit der Steuerelektronik bzw. mit dem Transformator verbunden werden. Hierdurch müssen keine Hydraulikleitungen zu den einzelnen Stellantrieben gelegt werden, so dass auch Leckagen der Leitungen oder der Anschlüsse vermieden werden. Zudem werden Druckverluste durch die langen Leitungen vermieden und so die Dynamik der Stellantriebe erhöht. Auch sind die einzelnen Stellantriebe einfach zu wechseln, ohne dass hierzu Hydrauliköl abgelassen werden müsste.
Zudem ist keine zentrale Hydraulikdruckversorgung nötig. Hierdurch wird auch kein separater geräuschisolierter Raum nötig, was die Kosten bei der Aufstellung des Flugsimulators reduziert. Zudem ergibt sich hierdurch auch ein verminderter Platzbedarf des Flugsimulators, so dass mehr Simulatoren auf der gleichen Fläche installiert werden können. Zudem wird die nötige Hydraulikölmenge massiv reduziert. Auch konnte so das Gesamtgewicht des Flugsimulators erheblich reduziert werden, so dass sich die Transportkosten vermindern und die Installation vereinfacht wird.
Zudem sind die Instandhaltungskoten sowie die Betriebskosten des Flugsimulators erheblich niedriger, da nur ein geringes Hydraulikölvolumen verwendet werden muss und zudem keine Hydraulikleitungen ausgetauscht werden müssen. Auch kann jeder einzelne Stellantrieb einfach ausgetauscht werden. Weiterhin umfasst das erfindungsgemäße System bereits eine integrierte Energieversorgung.

Im Vergleich zu einem elektromechanischen System ergeben sich folgende Vorteile:
Die Energieverbrauchsspitzen können im Vergleich zu elektromechanischen Antrieben durch die Verwendung der Hydraulikdruckspeicher extrem reduziert werden, was sowohl die Installationskosten als auch die Energiekosten reduziert. Zudem kann das Gesamtgewicht des Systems reduziert werden, was die Transportkosten vermindert und die Installation vereinfacht.

Auch sind die Wartungs- und Instandhaltungskosten reduziert, insbesondere da keine Hochleistungselektronik nötig ist. Des Weiteren ist eine Fehlfunktion des Systems z. B. durch Klemmen gegenüber elektromotorischen Systemen um das Hundertfache reduziert. Auch ist kein zusätzliches Dämpfungssystem nötig, da insbesondere durch die in die Stellzylinder integrierten Dämpfer im Hubendbereich bereits eine ausreichende Dämpfung zur Verfügung steht. Auch ist es nicht nötig, eine Batterieanordnung für den Fehlerfall vorzusehen. Zudem ist auch keine Elektronik zum Noteinfahren notwendig.

## Patentansprüche

1. Stellantrieb insbesondere zum Einsatz in Flugsimulatoren, mit einem hydraulischen Stellzylinder (10) und einem Proportional- oder Servoventil (20) zur Steuerung des hydraulischen Stellzylinders (10)
**dadurch gekennzeichnet,**
**dass** am Stellzylinder (10) eine Motor-Pumpeinheit (40, 30) zur Druckerzeugung angeordnet ist.

2. Stellantrieb insbesondere nach Anspruch 1, **dadurch gekennzeichnet,**
**dass** die Kolbenstange (11) des Stellzylinders (10) zur Reibungsreduktion mittels eines Linearlagers (14) geführt ist.

3. Stellantrieb insbesondere nach einem der vorangegangenen Ansprüche, **dadurch gekennzeichnet,**
**dass** im Stellzylinder (10) eine Gasfeder (50) insbesondere zum Ausgleich zumindest eines Teils der auf dem Stellzylinder (10) lastenden statischen Last integriert ist.

4. Stellantrieb nach Anspruch 3, **dadurch gekennzeichnet,**
**dass** die Gasfeder (50) mit Stickstoff gefüllt ist.

5. Stellantrieb nach Anspruch 3, **dadurch gekennzeichnet,**
**dass** in der Gasfeder (50) ein Positionssensor (55) zur Bestimmung der Position des Stellzylinderkolbens (11) angeordnet ist.

6. Stellantrieb nach einem der vorangegangenen Ansprüche, **dadurch gekennzeichnet,**
**dass** ein Hydraulikspeicher (35) zur Reduktion der benötigten Spitzenleistung der Motor-Pumpeinheit (40, 30) vorgesehen ist.

7. Stellantrieb nach Anspruch 6, **dadurch gekennzeichnet,**
**dass** der Hydraulikspeicher (35) auch dazu genutzt wird, im Fehlerfall den Stellantrieb aktiv ein- oder auszufahren.

8. Stellantrieb nach Anspruch einem der vorangegangenen Ansprüche, **dadurch gekennzeichnet,**
**dass** das gesamte Hydrauliksystem am Stellzylinder (10) angeordnet ist.

9. Stellantrieb nach einem der vorangegangenen Ansprüche, **dadurch gekennzeichnet,**
**dass** der Stellzylinder (10) insbesondere im Hubendbereich mit einer Dämpfung (19) ausgestattet ist.

10. Stellantrieb nach einem der vorangegangenen Ansprüche, **dadurch gekennzeichnet,**
**dass** ein Ventil (22) zum Noteinfahren vorgesehen ist, welches vorzugsweise parallel zum Proportional- bzw. Servoventil (30) angebaut ist, insbesondere um die hydraulischen Verluste und die Baugröße des Ventils zu reduzieren.

11. Stellantrieb nach einem der vorangegangenen Ansprüche, **dadurch gekennzeichnet,**
**dass** die Ölfiltration (25) über den Leckölstrom der Pumpe erfolgt und vorzugsweise kein Filter zwischen Pumpe und Proportional- bzw. Servoventil angebaut ist.

12. Stellantrieb nach einem der vorangegangenen Ansprüche, **dadurch gekennzeichnet,**
**dass** der Ventilblock (23) des Stellantriebs integraler Bestandteil des Stellzylindergehäuses (12) ist.

13. Stellantrieb nach einem der vorangegangenen Ansprüche, **dadurch gekennzeichnet,**
**dass** eine elektrisch betriebene Motor-Pumpeinheit (40, 30) vorgesehen ist, die direkt an ein Aggregat (80) zur Bereitstellung der elektrischen Leistung, insbesondere einen Transformator, angeschlossen ist und die Ansteuerung der Stellantriebe (1,2) über das Proportional- bzw. Servoventil (20) geschieht.

14. Stellantrieb nach einem der vorangegangenen Ansprüche, **dadurch gekennzeichnet,**
**dass** der Stellzylinder (10) zwei Dichtungen (15, 16), insbesondere eine Niedrigdruck- und eine Hockdruckdichtung aufweist, und zwischen den Dichtungen eine Leckölleitung (33) vorgesehen ist.

15. Flugsimulator mit mindestens einem und insbesondere mit mehreren, insbesondere mit sechs Stellantrieben (1,2) nach einem der vorangegangenen Ansprüche.

16. Flugsimulator nach Anspruch 15, mit mehreren, insbesondere mit sechs, Stellantrieben (1,2), wobei an den Stellzylindern (10) der Stellantriebe jeweils eine Motor-Pumpeinheit (40,30) zur Druckerzeugung angeordnet ist.

17. Flugsimulator nach Anspruch 16, wobei ein zentrales Aggregat (80) zur Bereitstellung der Leistung für'die Motoren aller Motor-Pumpeinheiten vorgesehen ist.

18. Flugsimulator nach Anspruch 15, mit einer Steuerungs-, Regelungs- und/oder Überwachungselektronik (60) für die Stellantriebe.
